# EUROPEAN PATENT APPLICATION

(11) **EP 4 633 271 A1**
(43) Date of publication of application: **15.10.2025**
(21) Application number: 23912786.3
(22) Date of filing: 21.12.2023
(51) Int. Cl.: H04W 72/56, H04W 72/50, H04W 72/12, H04W 16/10, H04W 36/08, H04W 88/08

(54) **METHOD AND APPARATUS FOR SCHEDULING AIR RESOURCE OF VIRTUAL DISTRIBUTED UNIT IN WIRELESS COMMUNICATION SYSTEM**

(30) Priority: 26.12.2022 KR 20220184834; 27.03.2023 KR 20230039912
(71) Applicant: Samsung Electronics Co., Ltd., Suwon-si, Gyeonggi-do 16677 (KR)
(72) Inventor: AHN, Heungseop, Suwon-si, Gyeonggi-do 16677 (KR); KWON, Joonhwan, Suwon-si, Gyeonggi-do 16677 (KR); PARK, Hanjung, Suwon-si, Gyeonggi-do 16677 (KR)
(74) Representative: Appleyard Lees IP LLP
(86) International application number: PCT/KR2023/021309
(87) International publication number: WO 2024/144111

(57) **Abstract**

According to an embodiment of the present disclosure, a method, performed by a schedule coordinator, of scheduling radio resources of a virtual distributed unit (vDU) in a wireless communication system may be provided. The method may include identifying a radio unit (RU) to be migrated to a target vDU from among at least one RU connected to a source vDU, requesting the source vDU to exclusively transmit and receive first information including synchronization-related information of at least one user equipment (UE) connected to the RU, determining a scheduling priority of a source vDU-dedicated radio resource and a scheduling priority of a target vDU-dedicated radio resource, transmitting the scheduling priority of the source vDU-dedicated radio resource to the source vDU and transmitting the scheduling priority of the target vDU-dedicated radio resource to the target vDU, and when the migration of the RU is completed, requesting the target vDU to exclusively transmit and receive the first information and requesting the source vDU to stop transmitting and receiving the first information.

## Description

### Technical Field

The present disclosure relates to a wireless communication system, and more particularly, to a method and apparatus for dynamically scheduling radio resources (air resources) for transmitting and receiving various types of information in a wireless communication system including a virtual distributed unit (vDU).

### Background Art

With advancements in ideas and technologies, such as cloud computing and virtualization, architecture transformation is taking place in the traditional communication network field. Closeness is replaced by openness, exclusiveness is replaced by generality, and network functions on communication network elements are abstracted and virtualized to be executed on general hardware platforms.

A virtual radio access network (vRAN) is a way for telecommunications operators to run baseband functions as software. Virtualization of the RAN may be accomplished through network function virtualization (NFV), which allows the RAN to be run on a standard server without the need for special proprietary hardware.

NFV is a technology that configures networks by using commercial high-performance servers, storage devices, and switches, breaking away from existing networks that are heavily dependent on dedicated hardware, and virtualizes various network functions required for service provision to allow for flexible management.

NFV uses commercial hardware to perform various network software functions. This enables implementation of flexible software configurations in locations such as data centers, wide area networks, etc. This may also reduce the complexity of service deployment and overall investment costs, and improve the generalization and adaptability of network devices. In the case of communications networks, the functions of some standard network elements, such as the Gateway General Packet Radio Service (GPRS) Support Node (GGSN), Mobility Management Entity (MME), etc., may be virtualized and installed on general hardware devices in data centers.

In NFV, one or more virtualized network functions (VNFs) may be defined to implement network services. Physical/virtual network resources may be automatically allocated to VNFs required to implement each network service. For example, in NFV (especially in an Orchestrator of Management and Orchestration (MANO)), the allocation of computing resources may be automatically managed according to various factors such as requirements of network services, maximum performance and capacity of computing resources, computing resource management policies for network operators, or changes in the real-time status of network services and computing resources.

In a general fifth-generation (5G) RAN, a centralized unit (CU), a distributed unit (DU), and a radio unit (RU) are configured with a 1:N:M (1<N<M) topology, and each DU has enough computing resources to handle the maximum traffic that can be loaded on RUs connected thereto. Moreover, average traffic loaded on an RU is often only about 20% of the maximum capacity, so this may mean that more resources than necessary are allocated to a DU. In a vRAN system where CUs and DUs are implemented as software on general-purpose servers, such static server resource allocation has a problem of inefficient waste of computing resources or increased power consumption of the entire system.

Accordingly, there is a need for a technology that enables efficient use of server resources by dynamically scaling in or out a DU according to a real-time traffic situation in the vRAN system.

### Disclosure of Invention

### Technical Problem

An embodiment of the present disclosure may provide a technology that can efficiently use server resources and reduce the overall power consumption of a system by adjusting the amount of radio resources (air resources) allocated to each virtual distributed unit (vDU) according to the number of user equipments (UEs) connected to each vDU while a vDU scaling operation is being performed in a virtual radio access network (vRAN) system.

An embodiment of the present disclosure may provide a technology capable of scaling a vDU without interrupting communications between UEs connected to a specific radio unit (RU) by having a source vDU exclusively transmit and receive synchronization-related information of the UEs connected to the corresponding RU during migration of the RU from a source vDU to a target vDU.

An embodiment of the present disclosure may provide a technology capable of increasing the efficiency of radio resource utilization by determining a priority of scheduling radio resources between a source vDU and a target vDU while a vDU scaling operation is being performed and by a lower-priority vDU determining a dedicated radio resource thereof based on a resource allocation map received from a higher-priority vDU after scheduling a radio resource dedicated to the higher-priority vDU.

Technical problems to be solved by an embodiment of the present disclosure are not limited to the technical problems described and other technical problems may be inferred from embodiments described below.

### Solution to Problem

As a technical solution to the above technical problems, a method, performed by a schedule coordinator, of scheduling radio resources (air resources) of a vDU in a wireless communication system may include identifying an RU to be migrated to a target vDU from among at least one RU connected to a source vDU, requesting the source vDU to exclusively transmit and receive first information including synchronization-related information of at least one UE connected to the RU, determining a scheduling priority of a source vDU-dedicated radio resource and a scheduling priority of a target vDU-dedicated radio resource, transmitting the scheduling priority of the source vDU-dedicated radio resource to the source vDU and transmitting the scheduling priority of the target vDU-dedicated radio resource to the target vDU, and when migration of the RU is completed, requesting the target vDU to exclusively transmit and receive the first information and requesting the source vDU to stop transmitting and receiving the first information.

As a technical solution to the above technical problems, an apparatus for scheduling radio resources of a vDU in a wireless communication system may include a transceiver and at least one processor. The at least one processor may be configured to identify an RU to be migrated to a target vDU from among at least one RU connected to a source vDU, request, via the transceiver, the source vDU to exclusively transmit and receive first information including synchronization-related information of at least one UE connected to the RU, determine a scheduling priority of a source vDU-dedicated radio resource and a scheduling priority of a target vDU-dedicated radio resource, transmit, via the transceiver, the scheduling priority of the source vDU-dedicated radio resource to the source vDU and the scheduling priority of the target vDU-dedicated radio resource to the target vDU, and when the migration of the RU is completed, request, via the transceiver, the target vDU to exclusively transmit and receive the first information and request the source vDU to stop transmitting and receiving the first information.

As a technical solution to the above technical problems, a vRAN connected to a core network in a wireless communication system may include a virtual centralized unit (vCU), at least one vDU connected to the vCU, at least one RU connected to the at least one vDU, and a schedule coordinator configured to schedule radio resources of the at least one vDU. The schedule coordinator may be configured to identify an RU to be migrated to a target vDU from among at least one RU connected to a source vDU, request the source vDU to exclusively transmit and receive first information including synchronization-related information of at least one UE connected to the RU, determine a scheduling priority of a source vDU-dedicated radio resource and a scheduling priority of a target vDU-dedicated radio resource, transmit the scheduling priority of the source vDU-dedicated radio resource to the source vDU and the scheduling priority of the target vDU-dedicated radio resource to the target vDU, and when the migration of the RU is completed, request the target vDU to exclusively transmit and receive the first information and request the source vDU to stop transmitting or receiving the first information.

As a technical solution to the above technical problems, a computer-readable recording medium may have stored therein a program for executing at least one of the methods according to the disclosed embodiments on a computer.

### Brief Description of Drawings

FIG. 1 is a diagram illustrating a virtual distributed unit (vDU) according to an embodiment of the present disclosure.
FIG. 2 is a flowchart of a method, performed by a schedule coordinator, of scheduling radio resources of a vDU in a wireless communication system, according to an embodiment of the present disclosure.
FIG. 3 is a diagram illustrating a virtual radio access network (vRAN) according to an embodiment of the present disclosure.
FIG. 4 is a diagram illustrating an operation of scaling out a vDU, according to an embodiment of the present disclosure.
FIG. 5 is a diagram illustrating a vRAN after scale-out of a vDU is performed, according to an embodiment of the present disclosure.
FIG. 6A is a diagram illustrating an operation of scaling out a vDU, according to an embodiment of the present disclosure.
FIG. 6B is a diagram illustrating a schedule coordinator according to an embodiment of the present disclosure.
FIG. 7 is a diagram illustrating a method of scheduling radio resources of a vDU in a vDU scale-out operation, according to an embodiment of the present disclosure.
FIG. 8 is a diagram illustrating a resource allocation map for a radio resource dedicated to a higher-priority vDU, which is transmitted from the higher-priority vDU to a lower-priority vDU in downlink (or DL), according to an embodiment of the present disclosure.
FIG. 9 is a diagram illustrating a resource block (RB) map in downlink, according to an embodiment of the present disclosure.
FIG. 10 is a block diagram schematically illustrating a configuration of an apparatus for scheduling radio resources of a vDU, according to an embodiment of the present disclosure.
FIG. 11 is a block diagram schematically illustrating a configuration of a network entity, according to an embodiment of the present disclosure.

### Mode for the Invention

In the following description of the present disclosure, descriptions of technical features that are well known in the art to which the present disclosure pertains and are not directly related to the present disclosure are omitted. This is for clearly describing the essence of the present disclosure without obscuring it by omitting the unnecessary descriptions. Furthermore, the terms described below are defined by taking into account functions described in the present disclosure and may be changed according to a user's or operator's intent or practices. Therefore, definition of the terms should be made based on the overall descriptions in the present specification.

For the same reason, in the accompanying drawings, some components are exaggerated, omitted, or schematically illustrated. Furthermore, the size of each element does not entirely reflect an actual size thereof. In the drawings, like reference numerals refer to the same or corresponding elements throughout.

Advantages and features of the present disclosure, and methods of accomplishing the same, will be more readily appreciated by referring to the following description and the accompanying drawings. However, the present disclosure may be embodied in many different forms and should not be construed as being limited to embodiments set forth below. The disclosed embodiments are provided so that the present disclosure will be thorough and complete and will fully convey the scope of the disclosure to those of ordinary skill in the art to which the present disclosure belongs. An embodiment of the present disclosure may be defined by the claims. Throughout the specification, the same reference numerals represent the same or corresponding elements. Furthermore, in describing an embodiment of the present disclosure, when it is determined that detailed descriptions of related functions or configurations may unnecessarily obscure the essence of the present disclosure, the detailed descriptions thereof are omitted. In addition, the terms used herein are defined by taking into account functions described in the present disclosure and may be changed according to a user's or operator's intent, or practices. Therefore, definition of the terms should be made based on the overall descriptions in the present specification.

Considering the development of wireless communication from generation to generation, technologies have been developed mainly for services targeting humans, such as voice calls, multimedia services, data services, etc. After the commercialization of 5-th generation (5G) communication systems, an exponentially increasing number of connected devices are projected to be connected to communication networks. Examples of objects connected to networks may include vehicles, robots, drones, home appliances, displays, smart sensors installed in various infrastructures, construction machinery, factory equipment, etc. Mobile devices are expected to evolve into a variety of form factors such as augmented reality (AR) glasses, virtual reality (VR) headsets, and hologram devices, etc. In the 6-th-generation (6G) era, efforts are being made to develop improved 6G communication systems to provide various services by connecting hundreds of billions of devices and objects. For these reasons, a 6G communication system is referred to as a beyond 5G communication system.

In 6G communication systems, a peak data rate may be achieved as one terabyte (i.e., 1000 gigabytes) per second (Tbps), and a maximum radio interface latency may be achieved as 100 microseconds (µsec). That is, the transfer rate in a 6G communication system is 50 times faster than that in a 5G communication system, and the radio latency may be reduced to one-tenth of that in the 5G communication system.

Implementation of 6G communication systems in a terahertz (THz) band (e.g., the frequency range between the 95 gigahertz (GHz) and 3 THz) is under consideration to achieve such high data rate and ultra-low latency. In the THz band, the importance of technologies for guaranteeing a signal transmission distance, i.e., coverage, is expected to increase due to more severe path loss and atmospheric absorption compared to a millimeter-wave (mmWave) band introduced in 5G. It is necessary to develop, as the major technologies for securing coverage, radio frequency (RF) elements, antennas, novel waveforms which have better coverage than orthogonal frequency division multiplexing (OFDM), beamforming, multiple antenna transmission technologies, such as multiple input and multiple-output (massive MIMO), full dimensional MIMO (FD-MIMO), array antennas, and large scale antennas, and the like. In addition, novel technologies such as metamaterial-based lenses and antennas, high-dimensional spatial multiplexing technology using orbital angular momentum (OAM), reconfigurable intelligent surface (RIS), etc. have been discussed to improve the coverage of signals in the THz band.

Furthermore, to improve frequency efficiency and system networks for 6G communication systems, various technologies are being developed which include a full duplex technology for enabling uplink transmission and downlink transmission to simultaneously use the same frequency resource at the same time, a network technology using integration of satellites and high-altitude platform stations (HAPSs), a network structure innovation technology that supports mobile base stations and the like and enables optimization, automation, etc., of network operations, a dynamic spectrum sharing technology for avoiding collisions based on spectrum usage prediction, an artificial intelligence (Al)-based communication technologies that utilize Al from the design stage and internalize end-to-end Al support functions to realize system optimization, and next-generation distributed computing technologies that realize services of a complexity level beyond the limits of user equipment (UE) computing capabilities by utilizing ultra-high performance communication and computing resources (mobile edge computing (MEC), cloud, etc.). In addition, ongoing attempts are being made to further enhance a connectivity between devices, further optimize networks, promote the softwarization of network entities, and increase the openness of wireless communications through the design of new protocols to be used in 6G communication systems, implementation of hardware-based security environments, development of mechanisms for safe use of data, and development of technologies on a method of maintaining privacy.

Due to the research and development of these 6G communication systems, the next hyper-connected experience is expected to be provided through hyper-connectivity of the 6G communication systems, which includes not only connectivity between things but also connectivity between humans and things. Specifically, 6G communication systems are expected to provide services such as truly immersive extended reality (XR), high-fidelity mobile holograms, digital replica, etc. In addition, by providing services such as remote surgery, industrial automation, and emergency response via the 6G communication systems through enhancement of security and reliability, such technologies may be applied in various fields such as industry, medical care, automobiles, home appliances, etc.

A base station (or BS) is an entity responsible for allocating resources to a UE, and may be at least one of a next-generation Node B (gNode B), an evolved Node B (eNode B), a Node B (or an x Node B (x is an alphabet including g and e)), a wireless access unit, a base station controller, a satellite, an airborne vehicle, or a node on a network. A UE may include a mobile station (MS), a vehicle, a satellite, an airborne vehicle, a cellular phone, a smartphone, a computer, or a multimedia system capable of performing communication functions. Furthermore, in the present disclosure, a downlink (DL) may refer to a radio link through which a base station transmits data or a control signal to a UE, and an uplink (UL) may refer to a radio link through which a UE transmits data or a control signal to a base station. Additionally, there may be a sidelink (SL), which refers to a radio link for a signal transmitted from one UE to another.

Although an embodiment of the present disclosure may be described below using a long-term evolution (LTE), LTE-Advanced (LTE-A), or 5G system as an example, the embodiment of the present disclosure may be applied to other communication systems having similar technical backgrounds and channel configurations. For example, the other communication systems may include 5G-Advanced or New Radio (NR)-Advanced or 6G generation mobile communication technology developed after 5G mobile communication technology (or NR), and the 5G described below may be a concept including LTE, LTE-A and other similar services. Furthermore, one skilled in the art will understand that an embodiment of the present disclosure is applicable to other communication systems through modifications not departing from the scope of the present disclosure.

In an embodiment, each block of a flowchart in the drawings and combinations of blocks of the flowchart may be performed by computer program instructions. These computer program instructions may be loaded into a processor of a general-purpose computer, special-purpose computer, or other programmable data processing equipment, and thus, the instructions performed by the processor of the computer or the other programmable data processing equipment generate a unit for performing functions specified in the flowchart block(s). The computer program instructions may also be stored in a memory capable of directing the computer or the other programmable data processing equipment to implement functions in a specific manner, and thus, the instructions stored in the memory are capable of producing items including instruction means for performing functions described in the flowchart block(s). The computer program instructions may also be loaded into the computer or the other programmable data processing equipment.

In addition, each block of a flowchart may represent a portion of a module, segment, or code that includes one or more executable instructions for executing specified logical function(s). In an embodiment, functions mentioned in blocks may occur out of order. For example, two blocks illustrated in succession may be executed substantially simultaneously, or the blocks may sometimes be executed in reverse order depending on functions corresponding thereto.

As used herein, the term 'unit' denotes a software element or a hardware element such as a field-programmable gate array (FPGA) or an application-specific integrated circuit (ASIC), and performs specific functions. However, the term 'unit' is not limited to software or hardware. The 'unit' may be configured to be in an addressable storage medium or configured to operate one or more processors. In an embodiment, the term 'unit' may include elements such as software elements, object-oriented software elements, class elements, and task elements, processes, functions, attributes, procedures, subroutines, segments of program code, drivers, firmware, micro-codes, circuits, data, a database, data structures, tables, arrays, and variables. Functions provided by specific components and 'units' may be to reduce the number of components and 'units', or may be further divided into additional components. Furthermore, in an embodiment, a 'unit' may include one or more processors.

As used in the following description, terms referring to broadcasting information, terms referring to control information, terms related to communication coverage, terms referring to state changes (e.g., events), terms referring to network entities, terms referring to messages, terms referring to components of a device, etc. are exemplified for convenience of description. Thus, the present disclosure is not limited to terms to be described later, and other terms having the equivalent technical meaning may be used.

Hereinafter, for convenience of description, the present disclosure uses terms and names defined in the LTE and NR specifications which are the latest standards defined by the 3rd Generation Partnership Project (3GPP) organization among the existing communication standards. However, the present disclosure is not limited to the terms and names but may also be applied identically to systems that comply with other standards.

Hereinafter, embodiments of the present disclosure will be described in detail with reference to the accompanying drawings.

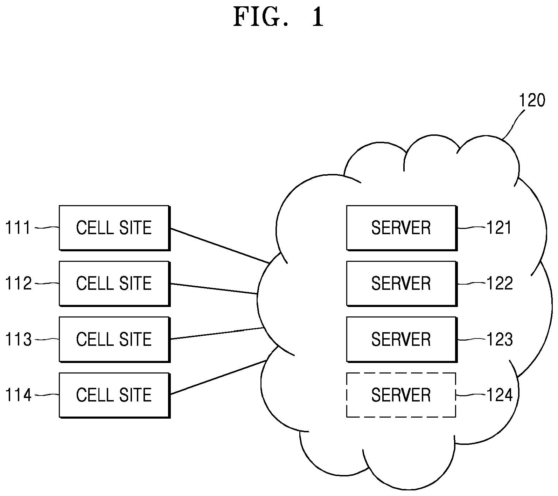

FIG. 1 is a diagram illustrating a virtual distributed unit (vDU) according to an embodiment of the present disclosure.

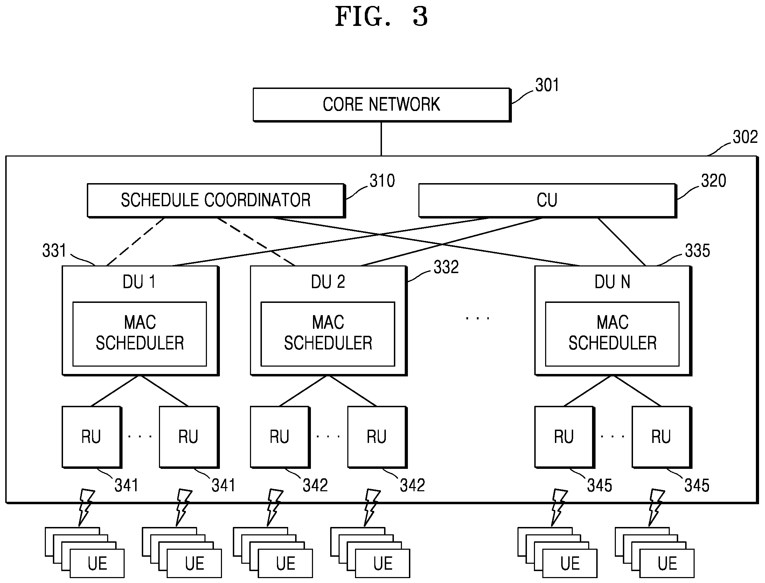

Traffic demands in the mobile communication market are increasing due to the popularity of high-definition video streaming and the emergence of augmented reality (AR) and virtual reality (VR) services. The performance of a radio access network (RAN), which is a crucial component of a mobile network, may directly affect the service quality experiences of users. RAN structures applied to communication systems prior to 5G have a closed system architecture and are therefore not efficient in meeting the quality requirements of 5G services. A virtual RAN (vRAN) allows for flexible and efficient network operation compared to a non-virtualized RAN. A vRAN architecture may include a vDU that performs baseband processing. A vRAN according to an embodiment of the present disclosure is described in more detail with reference to FIG. 3, as described below.

In 5G networks, a RAN system architecture with flexible functional split may be applied. A 5G RAN may divide an integrated network system into a plurality of functional components and relocate the functional components individually as needed. For example, the 5G RAN may include a centralized unit (CU) and at least one DU. The CU may perform network functions of a Radio Resource Control (RRC) or Packet Data Convergence Protocol (PDCP) entity based on non-real-time processing. The DU may perform baseband processing functions of a Radio Link Control (RLC), Medium Access Control (MAC), or Physical (PHY) entity based on real-time processing. In an embodiment, a PHY entity in the DU may be further split between the DU and a radio unit (RU). A CU-DU split may be represented as a higher-layer split, and a DU-RU split may be represented as a lower-layer split.

In an embodiment, the CU may be connected to a plurality of DUs. In this case, RRC/PDCP functions may be centralized, which may improve the quality of service associated with handovers within the same CU. In addition, the centralized CU may pool resources across the plurality of DUs, thereby increasing resource efficiency.

A 5G RAN including CU and DU may efficiently support dual connectivity (DC). In a network where CUs and DUs are separated, PDCP is offloaded to the CU, which can prevent PDCP load from being concentrated on the anchor DU and prevent load imbalance between DUs. In a network where CUs and DUs are separated, PDCP is offloaded to the CU, which may prevent the PDCP load from being concentrated on an anchor DU and prevent load imbalance between DUs.

Virtualization may transform network entities from dedicated hardware to software components, thereby increasing adaptability and flexibility. For example, a CU may be virtualized to configure a virtual CU (vCU), and a DU may be virtualized to configure a vDU. Virtualized network functions may operate on a common platform instead of dedicated hardware, and may be implemented using software-based cloud technology. Virtualization enables networks to meet the evolving demands of services. For example, when using a vDU, all baseband functions of the RLC, MAC, or PHY layers may be executed via a commercial off-the-shelf server.

In a vRAN, network functions may be completely separated from hardware. For example, at least one RAN function may be operated on a single hardware, thereby improving the flexibility of the network. In the case of existing hardware-oriented network solutions, hardware replacement is required to deploy new features or services. On the other hand, a vRAN enables independent horizontal scaling of infrastructure by separating hardware and software, and allows for flexible addition of new features or services by upgrading software without replacing hardware. In an embodiment, a vRAN system may represent a RAN system that reduces capital expenditures (CAPEX) and operating expenses (OPEX) by virtualizing DU and CU.

In a vRAN including a vDU, resources may be dynamically allocated according to various demands instead of allocating fixed resources. For example, the vRAN may flexibly manage vDU resources through dynamic scaling, and efficiently respond to network status changes through pooling. Network status changes may include cases where resource adjustment is required, such as traffic changes based on environmental information, addition of cell sites, unexpected traffic changes based on events, and traffic load imbalances between cell sites connected to a vDU.

Referring to FIG. 1, the efficiency of resource management may be improved through vDU pooling. Pooling technology may refer to a technology in which a plurality of cell sites 111, 112, 113, and 114 share the resource pool 120. Through vDU pooling, it is possible to reduce the number of servers required for building a RAN system (CAPEX reduction) by breaking a 1:1 relationship between a DU and a cell site, and pooling and virtualizing DUs. The resource pool 120 may be implemented in a plurality of vDU servers (or server resources) 121, 122, and 123. The vDU pooling technology enables a single vDU to share baseband processing resources and support baseband processing for the plurality of cell sites 111, 1112, 113, and 114.

In a non-virtualized RAN system, a DU may be connected one-to-one to a cell site, and the processing capacity of a specific DU may be determined based on maximum traffic that can enter a corresponding cell site. Traffic coming through a specific cell site may change depending on environmental information, and the time when the maximum traffic actually occurs is limited. Therefore, at least some of the DU resources are not used except for the time when the maximum traffic actually occurs. That is, when one DU corresponds to one cell site, for example, when the server 121 corresponds to the cell site 111, there may be available resources (idle resources) remaining in each DU. However, idle resources other than resources required to support the corresponding cell site 111 may not be used to support the other cell sites 112, 113, and 114. Therefore, this is inefficient because idle capacities of server resources as many as the number of cell sites cannot be utilized.

On the other hand, when the plurality of cell sites 111, 112, 113, and 114 are connected to the single resource pool 120 through vDU pooling, all server resources in the resource pool 120 may be used to support the plurality of connected cell sites 111, 112, 113, and 114. Therefore, an idle capacity remaining after supporting the first cell site 111 among the first server resource 121 may be used to support the second cell site 112. In other words, resources may be used efficiently and the number of servers constituting the resource pool 120 may be reduced compared to when one DU supports one cell site. Referring to FIG. 1, traffic coming from the four cell sites 111, 112, 113, and 114 may be handled by using only three servers 121, 122, and 123. When using three physical servers, power consumption may also be reduced (OPEX reduction) compared to a RAN system using four physical servers.

In an embodiment, scale-out may be performed when total traffic on a network increases so that the traffic cannot be handled with only the allocated server resources 121, 122, and 123. Scale-out may refer to an operation of allocating (adding or installing) additional server resources 124 within the resource pool 120 to cope with the increasing traffic. In other words, the scale-out operation may indicate an operation of, when the capacity or performance of existing servers reaches their limit, improving the performance of an entire network by adding an additional server (e.g., a server with similar specifications) to share the load of the existing servers.

In an embodiment, scale-in may be performed when the four servers 121, 122, 123, and 124 are allocated within the resource pool 120, and the total traffic on the network decreases so that the traffic can be handled with only the three server resources 121, 122, and 123. The scale-in may indicate an operation of saving network resources by reducing (removing or deleting) the number of servers that are no longer needed within the resource pool 120 to cope with the decreasing traffic.

In this way, according to an embodiment of the present disclosure, the server resources (121, 122, 123, 124) may be efficiently used by dynamically scaling in or out a vDU according to real-time traffic conditions in the vRAN system.

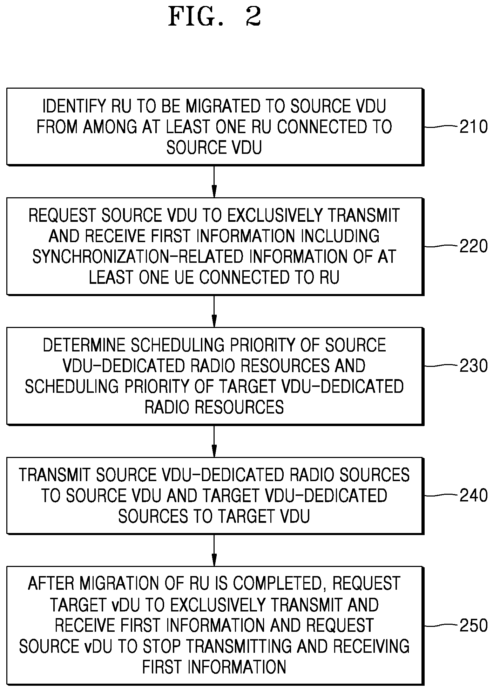

FIG. 2 is a flowchart of a method, performed by an apparatus such as a schedule coordinator, of scheduling radio resources of a vDU in a wireless communication system, according to an embodiment of the present disclosure.

In an embodiment, a method of scheduling radio resources of a vDU in a wireless communication system may be performed by an apparatus included in a vRAN and connected to the vDU. An apparatus for scheduling radio resources of the vDU may include, for example, a network entity such as a schedule coordinator.

The vRAN may include a schedule coordinator, a CU, and at least one DU. The CU included in the vRAN may be a vCU, and at least one DU included in the vRAN may each be a vDU. That is, throughout the present disclosure, it may be understood that the CU represents a vCU, and a DU represents a vDU.

In operation 210, an apparatus for scheduling radio resources of a vDU, such as a schedule coordinator, identifies an RU to be migrated to a target vDU from among at least one RU connected to a source vDU. For example, the apparatus may select a first RU to be migrated to the target vDU from among at least one RU connected to the source vDU.

A plurality of UEs may be connected to the first RU to be migrated from the source vDU to the target vDU. The migration of the first RU may include an operation of sequentially transferring the plurality of UEs connected to the first RU to the target vDU one by one or in certain groups. For example, if all the UEs receiving services through the first RU are simultaneously transferred from the source vDU to the target vDU, the allocation of radio resources from the source vDU to all the UEs is stopped, and all the UEs may be allocated new radio resources from the target vDU after the transfer operation is completed. In this case, it is impossible to perform the transfer in consideration of the quality of service (QoS) required by each UE, and the longer the time required for the transfer operation, the higher the possibility of a radio link failure (RLF) occurring for the plurality of UEs and the higher the possibility of the plurality of UEs performing random access (or RA) simultaneously. When multiple UEs perform random access simultaneously, the overall service quality of a network is further reduced. Therefore, in the present disclosure, in order to improve the overall service quality of the network, the plurality of UEs connected to the first RU to be migrated may not be transferred simultaneously, but they may be transferred sequentially from the source vDU to the target vDU, one by one or by grouping them into certain groups.

In operation 220, the apparatus for scheduling radio resources of the vDU, such as the schedule coordinator, requests the source vDU to exclusively transmit and receive first information including synchronization-related information of at least one UE connected to the RU. For example, the apparatus may request the source vDU to exclusively transmit and receive the first information including synchronization-related information of UEs connected to a specific RU to be migrated.

In an embodiment, the first information may include at least one of synchronization signal block (SSB) information, common physical downlink control channel (PDCCH) information, channel state information reference signal (CSI-RS) information, or DL common data information.

In order to provide a user with a high quality communication service, it is necessary to prevent interruptions of network communication of the UEs connected to the specific RU while the specific RU is being migrated from the source vDU to the target vDU. Therefore, according to an embodiment of the present disclosure, while the specific RU is being migrated from the source vDU to the target vDU, the source vDU may exclusively transmit and receive the synchronization-related information of the UEs connected to the specific RU, thereby allowing for vDU scaling while maintaining the communication of the UEs connected to the RU without interruption. In other words, the first information that the source vDU is exclusively responsible for transmitting and receiving during the migration of the RU may correspond to information that is essential for network connectivity of the UEs.

In order to perform the transfer operation one by one or in units of certain groups for the plurality of UEs connected to the first RU that is to be migrated from the source vDU to the target vDU, the first RU needs to be simultaneously connected to the source vDU and the target vDU until all the UEs connected to the first RU are transferred to the target vDU. Because one RU corresponds to a single radio resource set, in order for the first RU to be simultaneously connected to the source vDU and the target vDU, a dedicated radio resource for communication via the source vDU and a dedicated radio resource for communication via the target vDU need to be allocated so that they do not overlap each other on the single radio resource set. For example, a MAC scheduler of the source vDU and a MAC scheduler of the target vDU need to divide and schedule the resources so as not to overlap each other within the single radio resource set corresponding to the first RU. A radio resource dedicated to the source vDU (hereinafter, a source vDU-dedicated radio resource) may be used for communication with the source vDU, and a radio resource dedicated to the target vDU (hereinafter, a target vDU-dedicated radio resource) may be used for communication with the target vDU.

In operation 230, the apparatus for scheduling radio resources of the vDU, such as the schedule coordinator, determines a scheduling priority of a source vDU-dedicated radio resource and a scheduling priority of a target vDU-dedicated radio resource.

Prior to performing the operation of determining the scheduling priority of the source vDU-dedicated radio resource and the scheduling priority of the target vDU-dedicated radio resource, the schedule coordinator may receive, from the source vDU, information related to at least one UE served via the source vDU and receive, from the target vDU, information related to at least one UE served via the target vDU.

For example, when a first group of UEs and a second group of UEs are connected to the first RU to be migrated from the source vDU to the target vDU, at a specific time point, the first group of UEs may be connected to the target vDU via the first RU and the second group of UEs may be connected to the source vDU via the first RU. In this case, the first group of UEs may be served via the target vDU, and the target vDU may transmit information related to the first group of UEs to the schedule coordinator. Similarly, the second group of UEs may be served via the source vDU, and the source vDU may transmit information related to the second group of UEs to the schedule coordinator.

For example, information related to a specific UE may include at least one of a data rate associated with the UE (a transmission rate of data received from the UE or a transmission rate of data transmitted to the UE), the amount of traffic associated with the UE (the amount of data that the UE needs to transmit or the amount of data that needs to be transmitted to the UE), or a block error rate (a ratio of the number of blocks that are not transmitted correctly to the total number of blocks transmitted).

In an embodiment, the scheduling priority of the source vDU-dedicated radio resource and the scheduling priority of the target vDU-dedicated radio resource may be determined based on information related to the first group of UEs and information related to the second group of UEs. For example, the schedule coordinator may periodically determine, according to a preset period, a vDU that is to preferentially perform scheduling based on the information related to the first group of UEs and the information related to the second group of UEs. In other words, the schedule coordinator may determine, at intervals of the preset period, the scheduling priority of the source vDU-dedicated radio resource and the scheduling priority of the target vDU-dedicated radio resource. In the operation in which the schedule coordinator determines the scheduling priority between the vDUs at intervals of the preset period, information related to UEs (e.g., UE metrics) received at intervals of a period that are the same as or different from the period intervals at which the determination operation is performed may be used.

In an embodiment, the operation of determining the scheduling priority of the source vDU-dedicated radio resource and the scheduling priority of the target vDU-dedicated radio resource may use a proportional fair scheduling scheme which is a compromise between a max rate scheduling scheme for increasing the throughput of the overall wireless communication system and a round-robin scheduling scheme for increasing fairness.

In the proportional fair scheduling scheme, a prioritization coefficient may be calculated for each UE to determine which UE will be given priority in scheduling resources. The schedule coordinator may determine the scheduling priority of the source vDU-dedicated radio resource and the scheduling priority of the target vDU-dedicated radio resource based on a sum or weighted summation of prioritization coefficients of the UEs.

In an embodiment, a vDU with a higher scheduling priority of a dedicated radio resource among the source vDU and the target vDU may be referred to as a higher-priority vDU (or a primary vDU), and a vDU with a lower scheduling priority may be referred to as a lower-priority vDU (or a secondary vDU).

For example, a large prioritization coefficient of a specific UE may indicate that the UE has not been scheduled well and thus needs to be scheduled first, or that the overall throughput of the system may increase when scheduling is performed at a corresponding time point. Therefore, if a vDU with a larger sum or weighted sum of all the prioritization coefficients of UEs being serviced by each vDU is determined as a higher-priority vDU, the overall throughput of the system may be increased, and fairness may also be increased.

In an embodiment, second information transmitted using the source vDU-dedicated radio resource and the target vDU-dedicated radio resource may include at least one of physical downlink shared channel (PDSCH) information, physical uplink shared channel (PUSCH) information, physical uplink control channel (PUCCH) information, sounding reference signal (SRS) information, or UE-specific PDCCH information.

Table 1 below shows physical layer channels and signals in a 5G network.

**[Table 1]**

| **Direction** | **Data Type** | **Corresponding PHY Ch. or Signal** | **Contents** | **Common/ Dedicated Info. to UE** | **Scheduling location for time-freq grid** | **Processing during migration?** | |
|---|---|---|---|---|---|---|---|
| | | | | | | **Source vDU** | **Target vDU** |
| **DL** | SS Block (SSB) | PSS | - | common | fixed | O | X |
| | | SSS | - | | | | |
| | | DMRS | - | | | | |
| | | PBCH | MIB | | | | |
| | CSI-RS | CSI-RS | - | common | fixed | O | X |
| | DL Control (common) | DMRS | - | common | fixed | O | X |
| | | PDCCH | DCI (for SIB decoding) | | | | |
| | DL Control (dedicated) | DMRS | - | dedicated | fixed for CORESET variable for search space in CORESET (search ⊂ space CORESET) | O | O |
| | | PDCCH | DCI | | | | |
| | DL Data (common) | DMRS | - | common | variable (no constraint for time-freq. location) | O | X |
| | | PTRS | - | | | | |
| | | PDSCH | SIB | | | | |
| | DL Data (dedicated) | DMRS | - | dedicated | variable (no constraint for time-freq. location) | O | O |
| | | PTRS | - | | | | |
| | | PDSCH | DL user data (via DRB) RRC & NAS Signaling (via SRB) | | | | |
| **UL** | UL Control | DMRS | - | dedicated | variable (few constraint for time-freq. location) -> PUCCH Resource (need for configuration for usage of exclusive resource between source vDU and target vDU) | O | O |
| | | PTRS | - | | | | |
| | | PUCCH | UCI | | | | |
| | UL Data | DMRS | - | dedicated | variable (no constraint for time-freq. location) | O | O |
| | | PUSCH | UL user data (via DRB) RRC & NAS Signaling (via SRB) | | | | |
| | UL Sync | PRACH | preamble | dedicated | fixed | O | X |
| | SRS | SRS | - | dedicated | variable (few constraint for time-freq. -> SRS Resource (need for configuration for usage of exclusive resource between source vDU and target vDU) | O | O |

Referring to Table 1, SSB data, CSI-RS data, common DL control data (common PDCCH), common DL data (common PDSCH), and UL sync data (physical random access channel (PRACH)) signals, which are processed only by a source vDU during migration of an RU, represent information essential for maintaining the network connectivity for a UE. The information essential for maintaining the network connectivity for the UE may correspond to first information, and the source vDU may be exclusively responsible for transmitting and receiving the information during the migration of the RU.

Referring to Table 1, other channels or signals that are not exclusively transmitted and received by the source vDU during the migration of the RU may correspond to second information. For the second information, a vDU that transmits and receives data related to the second information may vary depending on whether the corresponding UE is connected to the source vDU or the target vDU.

In an embodiment, the migration of the RU may be performed via a handover of the at least one UE connected to the RU. For example, the migration of a specific RU from the source vDU to the target vDU may indicate that UEs connected to the RU are each connected to the source vDU and then handed over to the target vDU. That is, at a specific time point during the migration of the RU, some of the plurality of UEs connected to the RU may have been handed over to the target vDU, while the other UEs may have not yet been handed over thereto and thus remain connected to the source vDU. In this case, the UEs of which the handover to the target vDU is completed may transmit and receive the second information to and from the target vDU by using the target vDU-dedicated radio resource, and the UEs of which the connection to the source vDU is maintained because the handover thereof has not yet been performed may transmit and receive the second information to and from the source vDU by using the source vDU-dedicated radio resource.

In an embodiment, the migration of the specific RU may be completed when at least one UE connected to the RU is all handed over from the source vDU to the target vDU.

In an embodiment, the apparatus for scheduling radio resources of the vDU, such as the schedule coordinator, may receive a migration complete response message from the RU that is a migration target via the target vDU. In this case, the apparatus may determine, based on the received migration complete response message, that the migration of the RU that is the migration target from the source vDU to the target vDU is completed.

In operation 240, the apparatus for scheduling the radio resources of the vDU, such as the schedule coordinator, transmits the scheduling priority of the source vDU-dedicated radio resource to the source vDU, and transmits the scheduling priority of the target vDU-dedicated radio resource to the target vDU. For example, the schedule coordinator may transmit a scheduling priority for a radio resource to a processor included in the source vDU or the target vDU. In an embodiment, the schedule coordinator may additionally transmit, to the source vDU or the target vDU, information related to the amount of radio resources required by a UE to be scheduled.

In an embodiment, a vDU that has received scheduling priority information for dedicated radio resources may determine a dedicated radio resource based on its own priority. For example, the source vDU may determine the source vDU-dedicated radio resource based on the scheduling priority of the source vDU-dedicated radio resource received from the schedule coordinator, and the target vDU may determine the target vDU-dedicated radio resource based on the scheduling priority of the target vDU-dedicated radio resource received from the schedule coordinator.

In an embodiment, the operation in which the schedule coordinator requests the source vDU to exclusively transmit and receive the first information may include an operation of allocating, to the source vDU, a first radio resource for transmitting and receiving the first information. Thereafter, a higher-priority vDU may determine a radio resource dedicated to the higher-priority vDU from among resources excluding the first radio resource from an entire resource pool, and the higher-priority vDU that has completed the scheduling may transmit, to a lower-priority vDU, a resource allocation map for the determined radio resource dedicated to the higher-priority vDU. After receiving the resource allocation map for the radio resource dedicated to the higher-priority vDU, the lower-priority vDU may determine a radio resource dedicated to the lower-priority vDU from among resources excluding, from the entire resource pool, the first radio resource and the radio resource dedicated to the higher-priority vDU.

For example, if the scheduling priority of the source vDU-dedicated radio resource is higher than the scheduling priority of the target vDU-dedicated radio resource, i.e., if the source vDU is a higher-priority vDU and the target vDU is a lower-priority vDU, the source vDU may determine the source vDU-dedicated radio resource from among the resources excluding the first radio resource from the entire resource pool. The source vDU that has completed the scheduling may transmit, to the target vDU, a resource allocation map for the determined source vDU-dedicated radio resource. The target vDU may determine the target vDU-dedicated radio resource based on the resource allocation map for the source vDU-dedicated radio resource received from the source vDU. For example, the target vDU that has received the resource allocation map for the source vDU-dedicated radio resource may determine the target vDU-dedicated radio resource from among resources excluding, from the entire resource pool, the first radio resource and the source vDU-dedicated radio resource.

For example, if the scheduling priority of the target vDU-dedicated radio resource is higher than the scheduling priority of the source vDU-dedicated radio resource, i.e., if the source vDU is a lower-priority vDU and the target vDU is a higher-priority vDU, the target vDU may determine target vDU-dedicated radio resource from among the resources excluding the first radio resource from the entire resource pool. The target vDU that has completed the scheduling may transmit a resource allocation map for the determined target vDU-dedicated radio resource to the source vDU. The source vDU may determine the source vDU-dedicated radio resource based on the resource allocation map for the target vDU-dedicated radio resource received from the target vDU. For example, the source vDU that has received the resource allocation map for the target vDU-dedicated radio resource may determine the source vDU-dedicated radio resource from among resources excluding, from the entire resource pool, the first radio resource and the target vDU-dedicated radio resource.

In an embodiment, a region corresponding to the source vDU-dedicated radio resource may be separated from a region corresponding to the target vDU-dedicated radio resource in at least one of a time band or a frequency band on a resource block (RB) map corresponding to the entire resource pool.

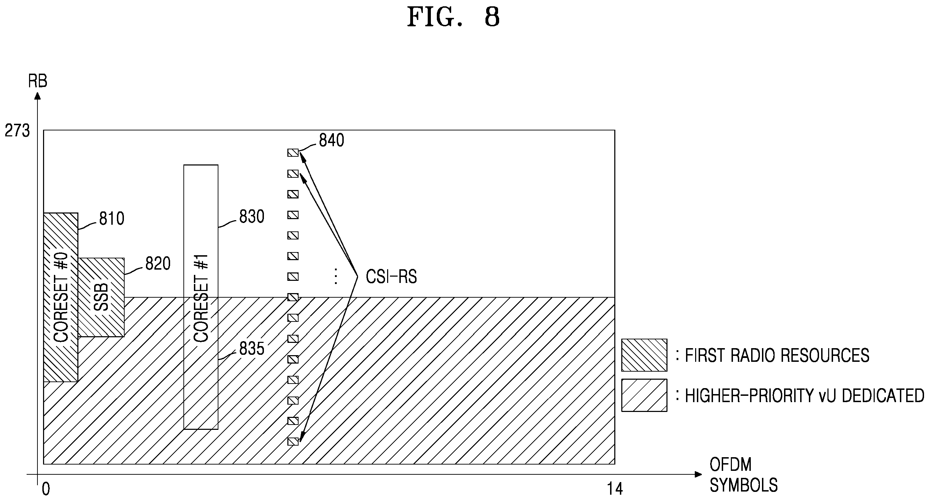

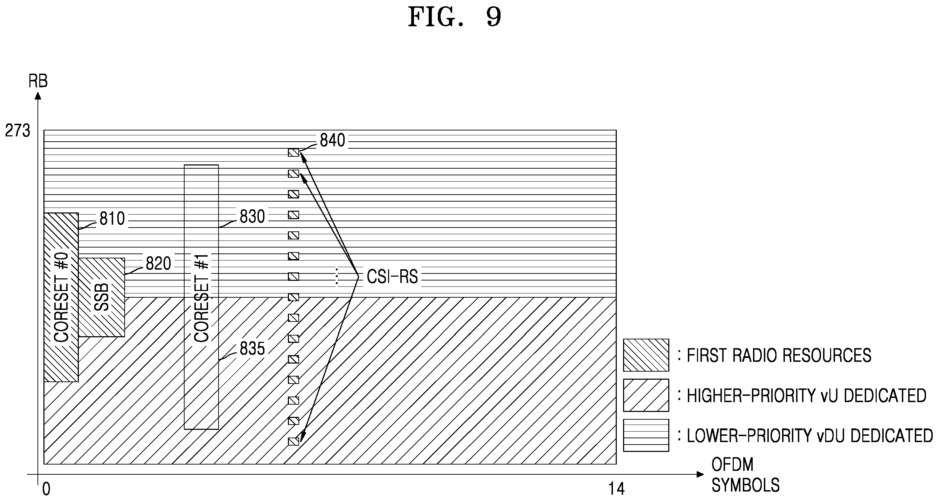

The RB map, the source vDU-dedicated radio resource and the target vDU-dedicated radio resource, according to an embodiment of the present disclosure, are described in more detail with reference to FIGS. 8 and 9 as described below.

In a DL scenario according to an embodiment of the present disclosure, the source vDU-dedicated radio resource and the target vDU-dedicated radio resource may each include a data channel resource for transmitting PDSCH information and a resource for transmitting UE-specific PDCCH information.

In a UL scenario according to an embodiment of the present disclosure, the source vDU-dedicated radio resource and the target vDU-dedicated radio resource may each include a data channel resource for transmitting PUSCH information and a resource for transmitting PUCCH information or SRS information.

In operation 250, after the migration of the selected RU is completed, the apparatus for scheduling the radio resources of the vDU, such as the schedule coordinator, requests the target vDU to exclusively transmit and receive the first information, and requests the source vDU to stop transmitting and receiving the first information. For example, when the migration of a specific RU that is a migration target to the target vDU is completed, the apparatus may request the target vDU to exclusively transmit and receive the first information and request the source vDU to stop transmitting and receiving the first information.

In an embodiment, operations 210 to 250 of FIG. 2 may be repeatedly performed. For example, when there are a plurality of RUs to be migrated from the source vDU to the target vDU, the apparatus may select a first RU to be migrated to the target vDU from among one or more RUs connected to the source vDU, and then return to operation 210 after the migration of the first RU is completed, and select a second RU to be migrated to the target vDU from among one or more RUs connected to the source vDU.

In an embodiment, if there are multiple RUs to be migrated from a source vDU to a target vDU, even if the migration operation of the first RU is completed, the operation of 'requesting the target vDU to exclusively transmit and receive the first information and requesting the source vDU to stop transmitting and receiving the first information' in operation 250 may not be performed. For example, to simplify the procedure and prevent unnecessary procedure delays, operation 250 may be performed after the migration operations for all the RUs to be migrated from the source vDU to the target vDU is completed.

FIG. 3 is a diagram illustrating a vRAN 302 according to an embodiment of the present disclosure.

The vRAN 302 is a way for telecommunications operators to run baseband functions as software. Virtualization of a RAN may be accomplished through network function virtualization (NFV), which allows the RAN to be run on a standard server without the need for special proprietary hardware.

In an embodiment, the vRAN 302 may be connected to a core network 301. Referring to FIG. 3, the vRAN 302 may include a vCU 320, at least one vDU 331, 332, and 335 connected to the vCU 320, at least one RU 341, 342, and 345 connected to the at least one vDU 331, 332, and 335, and a schedule coordinator 310 for scheduling radio resources of the at least one vDU 331, 332, and 335.

The schedule coordinator 310 may perform the method of FIG. 2 describe above. For example, the schedule coordinator 310 may identify an RU to be migrated to a target vDU from among at least one RU connected to a source vDU, request the source vDU to exclusively transmit and receive first information including synchronization-related information of at least one UE connected to the RU, determine a scheduling priority of a source vDU-dedicated radio resource and a scheduling priority of a target vDU-dedicated radio resource, and transmit the scheduling priority of the source vDU-dedicated radio resource to the source vDU and transmit the scheduling priority of the target vDU-dedicated radio resource to the target vDU, and when the migration of the RU is completed, request the target vDU to exclusively transmit and receive the first information and request the source vDU to stop transmitting or receiving the first information.

Referring to FIG. 3, the vRAN 302 may include the schedule coordinator 310, the CU 320, and the at least one DU 331, 332, and 335. The CU 320 included in the vRAN 302 may be a vCU, and the at least one DU 331, 332, and 335 included in the vRAN 302 may each be a vDU.

The vRAN 302 may be configured with a topology in which a ratio of RU, DU, and CU is M:N:1 (M>>N>>1). For example, the vRAN 302 may include one CU 320, and the plurality of DUs 331, 332, and 335 may be connected to the CU 320. Furthermore, the plurality of DUs 331, 332, and 335 may be respectively connected to the plurality of RUs 341, 342, and 345. The RUs 341, 342, and 345 of FIG. 3 may correspond to the cell sites 111, 112, 113, and 114 of FIG. 1, and the DUs 331, 332, and 335 may correspond to the servers 121, 122, and 123 of FIG. 1. UEs may be connected to the plurality of RUs 341, 342, and 345.

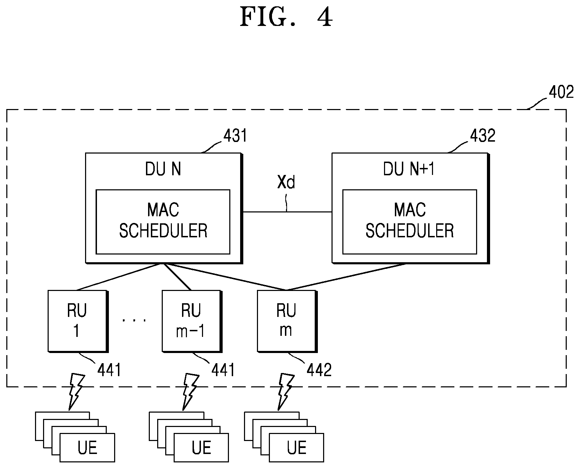

In an embodiment, the vRAN 302 may dynamically scale in or out a DU according to a real-time traffic situation. When scaling in a DU, the number of DUs included in the vRAN 302 may be reduced. For example, the RUs 341 connected to DU 1 331 may be all migrated to another DU (DU 2 332 or DU N 335), and then the DU 1 331 may be removed from the vRAN 302. When scaling out a DU, the number of DUs included in the vRAN 302 may be increased. For example, after a new DU N+1 is added, at least some of the RUs connected to the existing DU (DU 1 331, DU 2 332, or DU N 335) may be migrated to the added DU N+1. An operation of scaling out a DU is described in more detail below with reference to FIGS. 4 to 7.

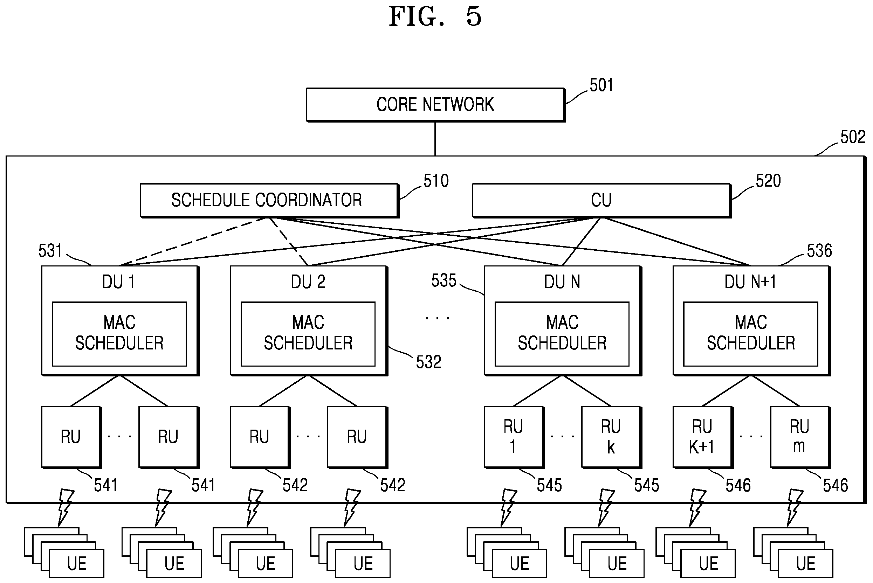

FIG. 4 is a diagram illustrating an operation of scaling out a vDU, according to an embodiment of the present disclosure, and FIG. 5 is diagram illustrating a vRAN 502 after scale-out of a vDU is performed.

A vRAN 402 of FIG. 4 and the vRAN 502 of FIG. 5 may each correspond to the vRAN 302 of FIG. 3.

Referring to FIG. 4, in the case of scale-out for increasing the number of DUs included in the vRAN 402, a new DU N+1 432 may be added to the vRAN 402, and then at least some RUs 442 among RUs 441 connected to an existing DU N 431 may be migrated to the added DU N+1 432.

The operation of scaling out a DU may be performed by an apparatus for scheduling radio resources of a vDU, such as a schedule coordinator. The apparatus selects an RU (e.g., RU m 442) to be migrated to a target vDU (e.g., DU N+1 432) from among at least one RU (e.g., RU 1 to RU m) connected to a source vDU (e.g., DU N 431). The apparatus then requests the source vDU (DU N 431) to exclusively transmit and receive first information including synchronization-related information of UEs connected to the selected RU (RU m 442). For example, the apparatus may request the source vDU (DU N 431) to exclusively transmit and receive first information including synchronization-related information of UEs connected to a specific RU (e.g., RU m 442) to be migrated.

Thereafter, the apparatus may determine a scheduling priority of a radio resource dedicated to the source vDU (DU N 431) and a scheduling priority of a radio resource dedicated to the target vDU (DU N+1 432), and transmit the determined scheduling priority to each DU. The radio resource dedicated to the source vDU (DU N 431) may be determined by the source vDU (DU N 431) based on the scheduling priority of the radio resource dedicated to the source vDU (DU N 431). The radio resource dedicated to the target vDU (DU N+1 432) may be determined by the target vDU (DU N+1 432) based on the scheduling priority of the radio resource dedicated to the target vDU (DU N+1 432).

In an embodiment, migration of the RU (RU m 442) may be performed via a handover of at least one UE connected to the RU (RU m 442). For example, the migration of the specific RU (RU m 442) from the source vDU (DU N 431) to the target vDU (DU N+1 432) may indicate that the UEs connected to the specific RU (RU m 442) are each connected to the source vDU (DU N 431) and then handed over to the target vDU (DU N+1 432). In other words, at a specific time point during the migration of the RU (RU m 442), some of the plurality of UEs connected to the corresponding RU (RU m 442) may have been handed over to the target vDU (DU N+1 432), while the other UEs may have not yet been handed over thereto and thus remain connected to the source vDU (DU N 431). In this case, the UEs of which the handover to the target vDU (DU N+1 432) is completed may transmit and receive data to and from the target vDU (DU N+1 432) by using the radio resource dedicated to the target vDU (DU N+1 432), and the UEs of which the connection to the source vDU (DU N 431) is maintained because the handover thereof has not yet been performed may transmit and receive data to and from the source vDU (DU N 431) by using the radio resource dedicated to the source vDU (DU N 431).

Unlike in the embodiment of the present disclosure, if all the UEs serviced via the RU m 442 in FIG. 4are transferred from the DU N 431 to the DU N+1 432 at once so as to be serviced by the DU N+1 432, a MAC scheduler of the DU N 431 and a MAC scheduler of the DU N+1 432 may operate as follows. First, while the migration of the RU m 442 is performed, the MAC scheduler of the DU N 431 may stop allocating radio resources to all the UEs connected to the RU m 442, and after the RU m 442 is migrated to DU N+1 432, the MAC scheduler of the DU N+1 432 may allocate radio resources to all the UEs again. In this way, when all the UEs connected to the RU m 442 are simultaneously handed over, the transfer operation cannot be performed in consideration of the QoS required by each UE, and when an operation of transferring context of the plurality of UEs to the DU N+1 432 takes a long time, RLFs may occur simultaneously to the plurality of UEs. When the RLFs occur to the plurality of UEs and thus the plurality of UEs performs an RA procedure, the overall QoS of a network may be degraded. Therefore, the handover is not simultaneously performed for all UEs connected to the RU m 442 to be migrated, but is performed sequentially or by grouping the UEs into small groups.

In order to hand over the UEs connected to the RU m 442 to be migrated one by one or in small groups, the RU m 442 needs to be simultaneously connected to the source vDU (DU N 431) and the target vDU (DU N+1 432) until all the UEs connected to the RU m 442 are handed over to the target vDU (DU N+1 432). In addition, in this case, because the single RU m 442 uses a single radio resource, a MAC scheduler included in each vDU needs to divide the single radio resource and allocate resources to the source vDU (DU N 431) and the target vDU (DU N+1 432) so that the resources do not overlap each other. According to an embodiment of the present disclosure, there may be provided a method of scheduling radio resources between the source vDU (DU N 431) and the target vDU (DU N+1 432) before a handover of all UEs is completed during scaling of a vDU.

Referring to FIG. 5, the vRAN 502 after the scale-out operation for increasing the number of DUs included in the vRAN 502 may further include a vDU (e.g., DU N+1 536) that is added compared to the vRAN 302 of FIG. 3. Among m RUs that were connected to DU N 535 before the scale-out operation, k RUs 545 may remain connected to the DU N 535 after the scale-out operation, while m-k RUs 546 may be connected to the newly added DU N+1 536 (where m and k are natural numbers satisfying k<m).

Moreover, referring back to FIG. 4, while the migration of the RU (RU m 442) that is a migration target is being performed, the source vDU (DU N 431) and the target vDU (DU N+1 432) may be connected to each other via an inter-DU interface. For example, the inter-DU interface may be an Xd interface.

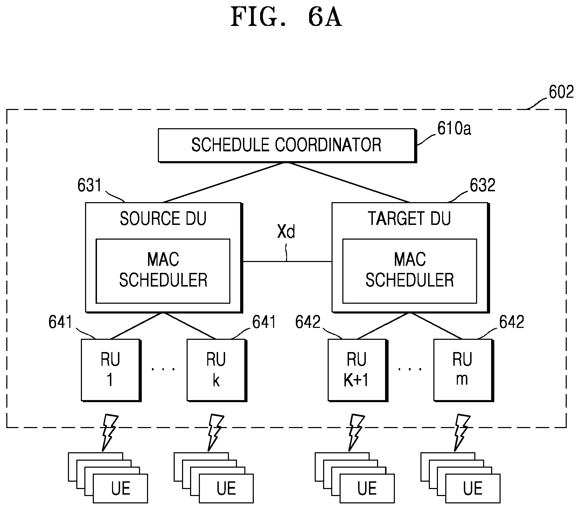

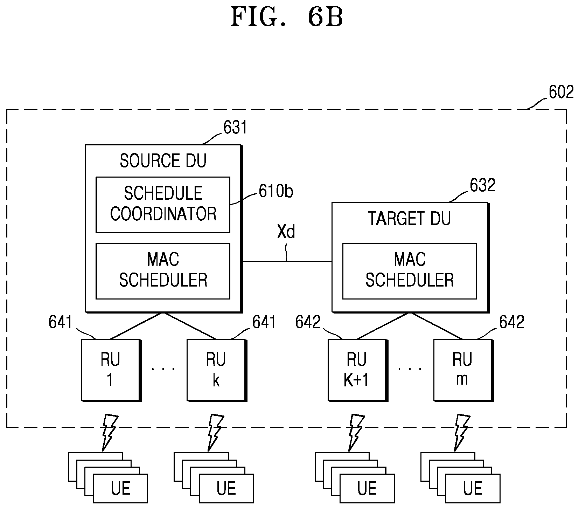

FIG. 6A is a diagram illustrating an operation of scaling out a vDU, according to an embodiment of the present disclosure, and FIG. 6B is a diagram illustrating a schedule coordinator according to an embodiment of the present disclosure.

A vRAN 602 of FIG. 6 may correspond to the vRAN 302 of FIG. 3, the vRAN 402 of FIG. 4, and the vRAN 502 of FIG. 5.

Referring to FIG. 6A, in the case of scale-out, after adding a target vDU 632 to the vRAN 602, at least some RUs 642 among RUs 641 connected to the source vDU 631 may be migrated to the target vDU 632. The scale-out operation may be performed by a schedule coordinator 610a. The schedule coordinator 610a selects RUs (RU k+1 to RU m 642) to be migrated to the target vDU 632 from among at least one RUs (RU 1 to RU m) connected to the source vDU 631. The schedule coordinator 610a then requests the source vDU 631 to exclusively transmit and receive first information including synchronization-related information of UEs connected to the selected RUs (RU k+1 to RU m 642). For example, the schedule coordinator 610a may request the source vDU 631 to exclusively transmit and receive first information including synchronization-related information of UEs connected to the RUs (RU k+1 to RU m 642) to be migrated.

Thereafter, the schedule coordinator 610a may determine a scheduling priority of a radio resource dedicated to the source vDU 631 and a scheduling priority of a radio resource dedicated to the target vDU 632. The radio resource dedicated to the source vDU 631 may be determined by the source vDU 631 based on the scheduling priority of the radio resource dedicated to the source vDU 631. The radio resource dedicated to the target vDU 632 may be determined by the target vDU 632 based on the scheduling priority of the radio resource dedicated to the target vDU 632. In an embodiment, migration of the RUs (RU k+1 to RU m 642) may be performed via a handover of at least one UE connected to each of the RUs (RU k+1 to RU m 642).

Referring to FIG. 6A, among m RUs that were connected to the source vDU 631 before the scale-out operation, k RUs 641 may remain connected to the source vDU 631 after the scale-out operation, while the m-k RUs 642 may be connected to the newly added target vDU 632 (where m and k are natural numbers satisfying k<m).

Moreover, while migration of the RUs (RU k+1 to RU m 642) is being performed, the source vDU 631 and the target vDU 632 may be connected to each other via an inter-DU interface. For example, the inter-DU interface may be an Xd interface.

During scale-in or scale-out operations, the source vDU 631 and the target vDU 632 share a common RU and thus share a common radio resource. On the other hand, to reduce the occurrence of signaling overhead and ensure concurrency, the schedule coordinator 610a may pre-allocate radio resources to be used exclusively by the source vDU 631 and the target vDU 632, respectively, but, in this case, due to a decrease in the degree of scheduling freedom, the link performance of a UE may deteriorate, the efficiency of radio resource utilization may decrease, and it may be difficult to respond to rapidly changing traffic.

For example, if the schedule coordinator 610a directly allocates a range of radio resources to be used exclusively by the source vDU 631 and the target vDU 632, the degree of scheduling freedom may be reduced as the range of radio resources to be used by each vDU is limited, and because the UE obtains a limited radio channel gain, the link performance of the UE, such as a data rate, the amount of data to be transmitted and received, or a block error rate, may deteriorate. In addition, because a resource allocation map for radio resources actually used is not shared between the source vDU 631 and the target vDU 632, there may be radio resources remaining unused in each vDU, which may reduce the efficiency of radio resource utilization. In addition, although the source vDU 631 and the target vDU 632 each adjust the radio resources in a semi-static manner, it may be difficult to respond to traffic that changes at time intervals finer than a resource adjustment period.

In an LTE-NR dynamic spectrum sharing (DSS) system, a vDU serving LTE becomes an anchor node for radio resource management, and the vDU serving LTE may always be a primary vDU. In other words, when the vDU serving LTE performs scheduling first within a range of shared radio resources and then transmits a map of the remaining radio resources to a vDU serving NR, the vDU serving NR performs scheduling within an unoccupied radio resource region. In the LTE-NR DSS system, a scheduling priority of LTE-related nodes is always set high because the system aims to use spectrum resources of LTE.

In an embodiment of the present disclosure, to achieve the overall throughput and fairness of an NR-NR DSS system, scheduling priorities may be determined to determine which of a source vDU and a target vDU serving the same NR protocol is to perform scheduling first.

According to an embodiment of the present disclosure, the source vDU 631 and the target vDU 632 dynamically schedule radio resources according to the scheduling priorities of the source vDU 631 and the target vDU 632 determined by the schedule coordinator 610a, thereby increasing the degree of scheduling freedom and thus improving the link performance of a UE, enhancing the efficiency of radio resource utilization, and enabling adaptation to rapidly changing traffic. Furthermore, by periodically determining the scheduling priorities of the source vDU 631 and target vDU 632 during a vDU scale-out operation, the overall throughput and fairness of the system may be increased.

Referring to FIG. 6A, the schedule coordinator 610a may exist separately outside the source vDU 631 and the target vDU 632, and referring to FIG. 6B, the schedule coordinator 610b may be included in a node, e.g., the source node vDU 631, which acts as an anchor node during the vDU scale-out operation.

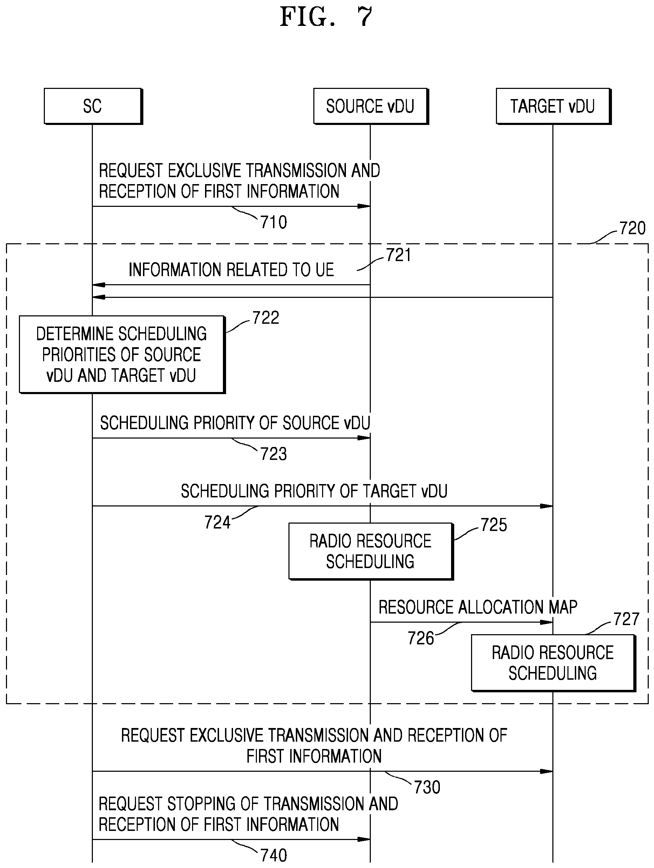

FIG. 7 is a diagram illustrating a method of scheduling radio resources of a vDU in a vDU scale-out operation, according to an embodiment of the present disclosure.

In operation 710, an apparatus for scheduling radio resources of a vDU, such as a scale coordinator SC, may request a source vDU to exclusively transmit and receive first information including synchronization-related information of a UE connected to an RU selected to be migrated. Operation 710 of FIG. 7 may correspond to operation 220 of FIG. 2 described above.

In operation 720, the apparatus for scheduling radio resources of the vDU, such as the schedule coordinator SC, may determine a scheduling priority of a source vDU-dedicated radio resource and a scheduling priority of a target vDU-dedicated radio resource (operation 722) and respectively transmit the scheduling priorities to the vDUs (operations 723 and 724), and the source vDU and the target vDU, which have received information about the scheduling priorities, may respectively schedule the dedicated radio resources based on the received scheduling priorities (operations 725 to 727). For example, the source vDU may determine the source vDU-dedicated radio resource, and the target vDU may determine the target vDU-dedicated radio resource.

In operation 721, prior to performing the operation of determining the scheduling priority of the source vDU-dedicated radio resource and the scheduling priority of the target vDU-dedicated radio resource, the schedule coordinator SC may receive, from the source vDU, information related to at least one UE served via the source vDU and receive, from the target vDU, information related to at least one UE served via the target vDU.

For example, when a first group of UEs and a second group of UEs are connected to the RU to be migrated from the source vDU to the target vDU, at a specific time point, the first group of UEs may have been transferred to and connected to the target vDU via the RU, while the second group of UEs may be connected to the source vDU via the RU before the transfer operation is performed. In this case, the source vDU may transmit information related to the second group of UEs served via the source vDU to the schedule coordinator SC, and the target vDU may transmit information related to the first group of UEs served via the target vDU to the schedule coordinator SC.

For example, information related to a specific UE may include at least one of a data rate associated with the UE (a transmission rate of data received from the UE or a transmission rate of data transmitted to the UE), the amount of traffic associated with the UE (the amount of data that the UE needs to transmit or the amount of data that needs to be transmitted to the UE), or a block error rate (a ratio of the number of blocks that are not transmitted correctly to the total number of blocks transmitted).

In operation 722, the schedule coordinator SC determines the scheduling priority of the source vDU-dedicated radio resource and the scheduling priority of the target vDU-dedicated radio resource. The scheduling priority of the source vDU-dedicated radio resource and the scheduling priority of the target vDU-dedicated radio resource may be determined based on the information related to the first group of UEs and information related to the second group of UEs, which are received by the schedule coordinator SC from the source vDU or the target vDU.

For example, the schedule coordinator SC may periodically determine, according to a preset period, a vDU that is to perform scheduling preferentially, based on the information related to the first group of UEs and the information related to the second group of UEs. In other words, the schedule coordinator may determine, at the preset period, the scheduling priority of the source vDU-dedicated radio resource and the scheduling priority of the target vDU-dedicated radio resource. In the operation in which the schedule coordinator determines the scheduling priority between the vDUs at intervals of the preset period, information related to UEs (e.g., UE metrics) received at intervals of a period that is the same as or different from the period at which the determination operation is performed may be used. Operation 722 of FIG. 7 may correspond to operation 230 of FIG. 2 described above.

In operation 723, the schedule coordinator SC transmits the scheduling priority of the source vDU-dedicated radio resource to the source vDU, and in operation 724, the schedule coordinator SC transmits the scheduling priority of the target vDU-dedicated radio resource to the target vDU. For example, the schedule coordinator SC may transmit a scheduling priority of a radio resource to a processor included in the source vDU or target vDU. In an embodiment, the schedule coordinator SC may additionally transmit, to the source vDU or the target vDU, information related to the amount of radio resources required by a UE to be scheduled. Operations 723 and 724 of FIG. 7 may correspond to operation 240 of FIG. 2 described above.

In FIG. 7, operations 725 to 727 are illustrated for a case where the scheduling priority of the source vDU-dedicated radio resource is higher than the scheduling priority of the target vDU-dedicated radio resource.

In operation 725, the source vDU may determine the source vDU-dedicated radio resource based on the scheduling priority of the source vDU received from the schedule coordinator SC. For example, when a resource used for the source vDU to exclusively transmit and receive the first information is a first radio resource, the source vDU may determine the source vDU-dedicated radio resource from among resources excluding the first radio resource from an entire resource pool.

In operation 726, the source vDU that has completed the scheduling may transmit, to the target vDU, a resource allocation map for the determined source vDU-dedicated radio resource.

In operation 727, the target vDU may determine the target vDU-dedicated radio resource, based on the scheduling priority of the target vDU-dedicated radio resource received from the schedule coordinator SC and the resource allocation map received from the source vDU that is a higher-priority vDU. For example, the target vDU that has received the resource allocation map for the target vDU-dedicated radio resource may determine the target vDU-dedicated radio resource from among resources excluding, from the entire resource pool, the first radio resource and the source vDU-dedicated radio resource.

In an embodiment, operation 720 may be performed repeatedly with a preset period. For example, the operations included in operation 720 may be repeatedly performed at intervals of a certain period while the system is performing a scale-out operation. The operations included in operation 720 may be repeatedly performed each time at least one UE connected to the RU to be migrated is transferred from the source vDU to the target vDU, or each time a specific number of UEs are transferred. Alternatively, the operations may be repeated at regular time intervals (e.g., 0.5 ms, 2 ms, 5 ms, ..., etc.)regardless of whether the connected UE has been transferred.

In a DL scenario according to an embodiment of the present disclosure, the source vDU-dedicated radio resource and the target vDU-dedicated radio resource may each include a data channel resource for transmitting PDSCH information and a resource for transmitting UE-specific PDCCH information.

In a UL scenario according to an embodiment of the present disclosure, the source vDU-dedicated radio resource and the target vDU-dedicated radio resource may each include a data channel resource for transmitting PUSCH information and a resource for transmitting PUCCH information or SRS information.

In operation 730 and operation 740, after migration of the selected RU is completed, the apparatus for scheduling radio resources of the vDU, such as the schedule coordinator SC, requests the target DU to exclusively transmit and receive the first information, and requests the source DU to stop transmitting and receiving the first information. For example, when the migration of a specific RU that is a migration target to the target vDU is completed, the apparatus may request the target vDU to exclusively transmit and receive the first information and request the source vDU to stop transmitting and receiving the first information. Operations 730 and 740 of FIG. 7 may correspond to operation 250 of FIG. 2 described above.

FIG. 8 is a diagram illustrating a resource allocation map for a radio resource dedicated to a higher-priority vDU, which is transmitted from the higher-priority vDU to a lower-priority vDU in DL, according to an embodiment of the present disclosure, and FIG. 9 is a diagram illustrating an RB map in DL, according to an embodiment of the present disclosure.

Referring to FIG. 8, a resource allocation map, an RB map, or a radio resource map may include information about a slot. For example, one slot may consist of 14 orthogonal frequency division multiplexing (OFDM) symbols in the time domain and 273 RBs in the frequency domain.

Among all radio resources, a first radio resource used for a source vDU to transmit and receive first information including synchronization-related information of at least one UE connected to an RU to be migrated may be preferentially allocated. The first information includes information that is common to a plurality of UEs or essential for connectivity of the UEs.

In a DL scenario, the first information may include at least one of SSB information, PDCCH information, CSI-RS information, or DL common data information.

For example, in a DL scenario, the first information may include common PDCCH information transmitted on a control resource set (CORESET) #0 resource 810, CSI-RS information transmitted on a CSI-RS resource 840, and SSB information transmitted on an SSB resource 820.

Thereafter, the higher-priority vDU may determine the dedicated radio resource based on a scheduling priority received from a schedule coordinator. The radio resource dedicated to the higher-priority vDU may be determined in a resource region excluding, from the entire resource pool, the first radio resource configured for transmitting the first information. The higher-priority vDU may be the source vDU or target vDU.

Referring to Table 1 above, other channels or signals that are not exclusively transmitted and received by the source vDU during the migration of the RU may correspond to second information. For the second information, a vDU that transmits and receives data related to the second information may vary depending on whether a corresponding UE is connected to the source vDU or the target vDU. In other words, the second information may be transmitted and received via a source vDU-dedicated radio resource or a target vDU-dedicated radio resource according to the connection relationship of the corresponding UE.

In an embodiment, the second information transmitted on the source vDU-dedicated radio resource and the target vDU-dedicated radio resource may include at least one of PDSCH information, PUSCH information, PUCCH information, SRS information, or UE-specific PDCCH information.

For example, in a DL scenario, the second information may include UE-specific PDCCH information transmitted on CORESET #1 resources 830 and 835, and PDSCH information or data transmitted on resources excluding, from the entire resource pool, first radio resources 810, 820, and 840 and the CORESET #1 resources 830 and 835 whose usage is determined.

Thereafter, the higher-priority vDU that has completed the scheduling may transmit a resource allocation map for the determined source vDU-dedicated radio resource to the lower-priority vDU. The resource allocation map that the higher-priority vDU transmits to the lower-priority vDU may include information about the first radio resource and information about the radio resource dedicated to the higher-priority vDU.

Referring to FIG. 9, the lower-priority vDU may determine the dedicated radio resource based on a scheduling priority received from the schedule coordinator and the resource allocation map received from the higher-priority vDU. For example, after receiving the resource allocation map for the radio resource dedicated to the higher-priority vDU, the lower-priority vDU may determine the radio resource dedicated to the lower-priority vDU from among resources excluding, from the entire resource pool, the first radio resource and the radio resource dedicated to the higher-priority vDU.

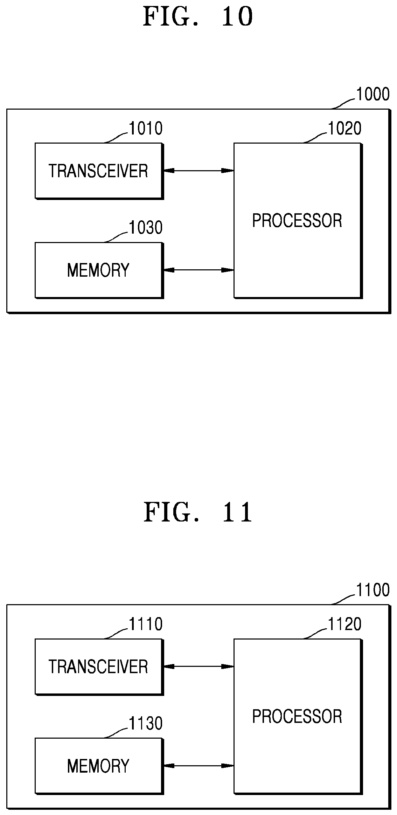

FIG. 10 is a block diagram schematically illustrating a configuration of an apparatus 1000 for scheduling radio resources of a vDU, according to an embodiment of the present disclosure. In an embodiment, the apparatus 1000 may be a schedule coordinator as shown in FIG. 3, 5, or 6.

Referring to FIG. 10, the apparatus 100 may include a transceiver 1010, a processor 1020, and a memory 1030. In accordance with the communication method of the apparatus 1000 described above, the transceiver 1010, the processor 1020, and the memory 1030 of the apparatus 1000 may operate. However, the components of the apparatus 1000 are not limited to the above example. For example, the apparatus 1000 may include more or fewer components than the components described above. In an embodiment, the transceiver 1010, the processor 1020, and the memory 1030 may be implemented in the form of a single chip. Furthermore, the processor 1020 may include one or more processors.

The transceiver 1010 is a collective term for a transmitter of the apparatus 1000 and a receiver of the apparatus 1000, and may transmit and receive signals to and from a UE or network entity. The signals transmitted to and received from the UE or network entity may include control information and data. To achieve this, the transceiver 1010 may be composed of an RF transmitter for up-converting and amplifying a frequency of a signal being transmitted, and an RF receiver for low-noise amplifying a received signal and down-converting its frequency. However, this is merely an embodiment of the transceiver 1010, and components of the transceiver 1010 are not limited to the RF transmitter and the RF receiver.

Additionally, the transceiver 1010 may perform functions for transmitting and receiving signals via a radio channel. For example, the transceiver 1010 may receive a signal via a radio channel and output the signal to the processor 1020 and transmit a signal output from the processor 1020 via the radio channel.

The memory 1030 may store data and programs necessary for operations of the apparatus 1000. Furthermore, the memory 1030 may store control information or data in a signal obtained by the apparatus 1000. The memory 1030 may include storage media such as read-only memory (ROM), random access memory (RAM), hard discs, compact disc ROM (CD-ROM), and digital video discs (DVDs), or a combination of the storage media. Furthermore, the memory 1030 may not exist separately but may be configured to be included in the processor 1020. The memory 1030 may consist of volatile memory, non-volatile memory, or a combination of volatile and non-volatile memory. The memory 1030 may also provide stored data according to a request from the processor 1020.

The processor 1020 may control a series of processes such that the apparatus 1000 may operate according to the embodiment of the present disclosure. For example, the processor 1020 may receive control signals and data signals via the transceiver 1010 and process the received control signals and data signals. The processor 1020 may transmit the processed control signals and data signals via the transceiver 1010. In addition, the processor 1020 may write data to and read data from the memory 1030. The processor 1020 may perform functions of a protocol stack required by communication standards. To this end, the processor 1020 may include at least one processor or microprocessor. In an embodiment, a portion of the transceiver 1010 or the processor 1020 may be referred to as a communication processor (CP).

The processor 1020 may be configured as one or a plurality of processors. In this case, the one or plurality of processors may be a general-purpose processor such as a central processing unit (CPU), an application processor (AP), a digital signal processor (DSP), etc., a dedicated graphics processor, such as a graphics processing unit (GPU) and a vision processing unit (VPU), or a dedicated Al processor, such as a neural processing unit (NPU). For example, if the one or plurality of processors is a dedicated Al processor, the dedicated Al processor may be designed with a hardware structure specialized for processing a specific Al model.

In an embodiment, the apparatus 1000 may identify an RU to be migrated to a target vDU from among at least one RU connected to a source vDU, request, via a transceiver, the source vDU to exclusively transmit and receive first information including synchronization-related information of at least one UE connected to the RU, determine a scheduling priority of a source vDU-dedicated radio resource and a scheduling priority of a target vDU-dedicated radio resource, transmit, via the transceiver, the scheduling priority of the source vDU-dedicated radio resource to the source vDU and the scheduling priority of the target vDU-dedicated radio resource to the target vDU, and when the migration of the RU is completed, request, via the transceiver, the target vDU to exclusively transmit and receive the first information and request the source vDU to stop transmitting and receiving the first information.

FIG. 11 is a block diagram schematically illustrating a configuration of a network entity 1100, according to an embodiment of the present disclosure. The network entity 1100 may correspond to a server, a CU, a vCU, a DU, a vDU, an RU, a core network, or a UE, according to an embodiment of the present disclosure.

Referring to FIG. 11, the network entity 1100 may include a processor 1120, a memory 1130, and a transceiver 1110. However, the components of the network entity 1100 are not limited to the above example. For example, the network entity 1100 may include more or fewer components than the components described above. In an embodiment, the processor 1120, the memory 1130, and the transceiver 1110 may be implemented in the form of a single chip.

The processor 1120 may be configured as one or a plurality of processors. In this case, the one or plurality of processors may be a general-purpose processor such as a CPU, an AP, a DSP, etc., a dedicated graphics processor, such as a GPU and a VPU, or a dedicated Al processor, such as an NPU. For example, if the one or plurality of processors is a dedicated Al processor, the dedicated Al processor may be designed with a hardware structure specialized for processing a specific Al model.

The processor 1120 may control a series of processes such that the network entity 1100 may operate according to the embodiment of the present disclosure. For example, the processor 1120 may receive control signals and data signals via the transceiver 1110 and process the received control signals and data signals. The processor 1120 may transmit the processed control signals and data signals via the transceiver 1110. Furthermore, the processor 1120 may control input data derived from the received control signals and data signals to be processed according to a predefined operation rule or an Al model stored in the memory 1130. In addition, the processor 1120 may write data to and read data from the memory 1130. The processor 1120 may perform functions of a protocol stack required by communication standards. According to an embodiment, the processor 1120 may include at least one processor. In an embodiment, a portion of the transceiver 1110 or the processor 1120 may be referred to as a CP.

The memory 1130 may store data and programs necessary for operations of the network entity 1100. Furthermore, the memory 1130 may store control information or data in a signal obtained by the network entity 1100. Furthermore, the memory 1130 may store predefined operation rules or Al models used by the network entity 1100. The memory 1130 may include storage media such as ROM, RAM, hard discs, CD-ROM, and DVDs, or a combination of the storage media. Furthermore, the memory 1130 may not exist separately but may be configured to be included in the processor 1120. The memory 1130 may consist of volatile memory, non-volatile memory, or a combination of volatile and non-volatile memory. The memory 1130 may also provide stored data according to a request from the processor 1120.

The transceiver 1110 is a collective term for a transmitter and a receiver, and the transceiver 1110 of the network entity 1100 may transmit and receive signals to and from the apparatus 1000 or another network entity. The signals transmitted and received may include control information and data. To achieve this, the transceiver 1110 may be composed of an RF transmitter for up-converting and amplifying a frequency of a signal being transmitted, and an RF receiver for low-noise amplifying a received signal and down-converting its frequency. However, this is merely an embodiment of the transceiver 1110, and components of the transceiver 1110 are not limited to the RF transmitter and the RF receiver. For example, the transceiver 1110 may receive a signal via a radio channel and output the signal to the processor 1120 and transmit a signal output from the processor 1120 via a radio channel.

Various embodiments of the present disclosure may be implemented or supported by one or more computer programs, and the computer programs may be created from computer-readable program code and recorded on computer-readable media. In the present disclosure, an "application" and a "program" refer to one or more computer programs, software components, a set of instructions, procedures, functions, objects, classes, instances, associated data, or portions thereof, which are suitable for implementation in computer-readable program code. The "computer-readable program code" may include various types of computer code including source code, object code, and executable code. The "computer-readable media" may include various types of media that are accessible by a computer, such as ROM, RAM, a hard disk drive (HDD), CDs, DVDs, or various other types of memory.

Furthermore, a machine-readable storage medium may be provided in the form of a non-transitory storage medium. In this regard, the 'non-transitory storage medium' is a tangible device, and may exclude wired, wireless, optical, or other communication links through which transient electrical or other signals are transmitted. Moreover, the 'non-transitory storage medium' does not differentiate between where data is semi-permanently stored in the storage medium and where the data is temporarily stored in the storage medium. For example, the 'non-transitory storage medium' may include a buffer for temporarily storing data. The computer-readable media may be any available media that are accessible by the computer and may include both volatile and non-volatile media and both detachable and non-detachable media. The computer-readable media may include media in which data may be permanently stored and media in which data may be stored and then overwritten, such as a rewritable optical disk or an erasable memory device.

According to an embodiment, methods according to various embodiments disclosed herein may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) online via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

A method, performed by a schedule coordinator, of scheduling radio resources of a vDU in a wireless communication system may include identifying an RU to be migrated to a target vDU from among at least one RU connected to a source vDU, requesting the source vDU to exclusively transmit and receive first information including synchronization-related information of at least one UE connected to the RU, determining a scheduling priority of a source vDU-dedicated radio resource and a scheduling priority of a target vDU-dedicated radio resource, transmitting the scheduling priority of the source vDU-dedicated radio resource to the source vDU and the scheduling priority of the target vDU-dedicated radio resource to the target vDU, and when the migration of the RU is completed, requesting the target vDU to exclusively transmit and receive the first information and requesting the source vDU to stop transmitting and receiving the first information.

In an embodiment, the first information may include at least one of SSB information, common PDCCH information, CSI-RS information, or DL common data information.

In an embodiment, second information transmitted using the source vDU-dedicated radio resource and the target vDU-dedicated radio resource may include at least one of PDSCH information, PUSCH information, PUCCH information, SRS information, or UE-specific PDCCH information.

In an embodiment, the migration of the RU may be completed when the at least one UE connected to the RU is all handed over from the source vDU to the target vDU.

In an embodiment, the method may further include receiving, from the source vDU, information related to at least one UE served via the source vDU, and receiving, from the target vDU, information related to at least one UE served via the target vDU. The scheduling priority of the source vDU-dedicated radio resource and the scheduling priority of the target vDU-dedicated radio resource may be determined based on the information related to the at least one UE served via the source vDU and the information related to the at least one UE served via the target vDU.

In an embodiment, the information related to the UE may include at least one of a data rate, a traffic volume, or a block error rate associated with the UE.

In an embodiment, the scheduling priority of the source vDU-dedicated radio resource and the scheduling priority of the target vDU-dedicated radio resource may be determined at intervals of a preset period.

In an embodiment, the source vDU-dedicated radio resource may be determined by the source vDU based on the scheduling priority of the source vDU-dedicated radio resource, and the target vDU-dedicated radio resource may be determined by the target vDU based on the scheduling priority of the target vDU-dedicated radio resource.

In an embodiment, when the scheduling priority of the source vDU-dedicated radio resource is higher than the scheduling priority of the target vDU-dedicated radio resource, the target vDU-dedicated radio resource may be determined by the target vDU based on a resource allocation map for the source vDU-dedicated radio resource, which is received from the source vDU.

In an embodiment, when the scheduling priority of the target vDU-dedicated radio resource is higher than the scheduling priority of the source vDU-dedicated radio resource, the source vDU-dedicated radio resource may be determined by the source vDU based on a resource allocation map for the target vDU-dedicated radio resource, which is received from the target vDU.

In an embodiment, a region corresponding to the source vDU-dedicated radio resource may be separated from a region corresponding to the target vDU-dedicated radio resource in at least one of a time band or a frequency band on an RB map corresponding to an entire resource pool.

An apparatus for scheduling radio resources of a vDU in a wireless communication system may include a transceiver and at least one processor. The at least one processor may be configured to identify an RU to be migrated to a target vDU from among at least one RU connected to a source vDU, request, via the transceiver, the source vDU to exclusively transmit and receive first information including synchronization-related information of at least one UE connected to the RU, determine a scheduling priority of a source vDU-dedicated radio resource and a scheduling priority of a target vDU-dedicated radio resource, transmit, via the transceiver, the scheduling priority of the source vDU-dedicated radio resource to the source vDU and the scheduling priority of the target vDU-dedicated radio resource to the target vDU, and when the migration of the RU is completed, request, via the transceiver, the target vDU to exclusively transmit and receive the first information and request the source vDU to stop transmitting and receiving the first information.

In an embodiment, the first information may include at least one of SSB information, common PDCCH information, CSI-RS information, or DL common data information.

In an embodiment, second information transmitted using the source vDU-dedicated radio resource and the target vDU-dedicated radio resource may include at least one of PDSCH information, PUSCH information, PUCCH information, SRS information, or UE-specific PDCCH information.

In an embodiment, the migration of the RU may be completed when the at least one UE connected to the RU is all handed over from the source vDU to the target vDU.

In an embodiment, the at least one processor may be configured to receive, via the transceiver, from the source vDU, information related to at least one UE served via the source vDU, and receiving, via the transceiver, from the target vDU, information related to at least one UE served via the target vDU. The at least one processor may be configured to determine the scheduling priority of the source vDU-dedicated radio resource and the scheduling priority of the target vDU-dedicated radio resource, based on the information related to the at least one UE served via the source vDU and the information related to the at least one UE served via the target vDU.

In an embodiment, the information related to the UE may include at least one of a data rate, a traffic volume, or a block error rate associated with the UE.

In an embodiment, the at least one processor may be configured to determine the scheduling priority of the source vDU-dedicated radio resource and the scheduling priority of the target vDU-dedicated radio resource at intervals of a preset period.

In an embodiment, the source vDU-dedicated radio resource may be determined by the source vDU based on the scheduling priority of the source vDU-dedicated radio resource, and the target vDU-dedicated radio resource may be determined by the target vDU based on the scheduling priority of the target vDU-dedicated radio resource.

In an embodiment, when the scheduling priority of the source vDU-dedicated radio resource is higher than the scheduling priority of the target vDU-dedicated radio resource, the target vDU-dedicated radio resource may be determined by the target vDU based on a resource allocation map for the source vDU-dedicated radio resource, which is received from the source vDU.

In an embodiment, when the scheduling priority of the target vDU-dedicated radio resource is higher than the scheduling priority of the source vDU-dedicated radio resource, the source vDU-dedicated radio resource may be determined by the source vDU based on a resource allocation map for the target vDU-dedicated radio resource, which is received from the target vDU.

In an embodiment, a region corresponding to the source vDU-dedicated radio resource may be separated from a region corresponding to the target vDU-dedicated radio resource in at least one of a time band or a frequency band on an RB map corresponding to an entire resource pool.

A vRAN connected to a core network in a wireless communication system may include a vCU, at least one vDU connected to the vCU, at least one RU connected to the at least one vDU, and a schedule coordinator configured to schedule radio resources of the at least one vDU. The schedule coordinator may be configured to identify an RU to be migrated to a target vDU from among at least one RU connected to a source vDU, request the source vDU to exclusively transmit and receive first information including synchronization-related information of at least one UE connected to the RU, determine a scheduling priority of a source vDU-dedicated radio resource and a scheduling priority of a target vDU-dedicated radio resource, transmit the scheduling priority of the source vDU-dedicated radio resource to the source vDU and transmit the scheduling priority of the target vDU-dedicated radio resource to the target vDU, and when migration of the RU is completed, request the target vDU to exclusively transmit and receive the first information and request the source vDU to stop transmitting or receiving the first information.

In an embodiment, each of the at least one vDU may include a MAC scheduler. Each MAC scheduler may be configured to determine a dedicated radio resource for the vDU corresponding thereto.

In an embodiment, the schedule coordinator may be included in the source vDU. The source vDU may include a processor. The schedule coordinator may be configured to request the processor to exclusively transmit and receive the first information, transmit the scheduling priority of the source vDU-dedicated radio resource to the processor, and when the migration of the RU is completed, request the processor to stop transmitting and receiving the first information.

The above description of the present disclosure is provided for illustration, and it will be understood by those of ordinary skill in the art that changes in form and details may be readily made therein without departing from technical idea or essential characteristics of the present disclosure. For example, adequate effects may be achieved even when the above-described techniques are performed in a different order than that described above, and/or the aforementioned components of the systems, structures, devices, circuits, etc. are coupled or combined in different forms and modes than those described above or are replaced or supplemented by other components or their equivalents. Accordingly, the above-described embodiments and all aspects thereof are merely examples and are not limiting. For example, each component defined as an integrated component may be implemented in a distributed fashion, and likewise, components defined as separate components may be implemented in an integrated form.

The scope of the present disclosure is defined not by the detailed description thereof but by the following claims, and all the changes or modifications within the meaning and scope of the appended claims and their equivalents will be construed as being included in the scope of the present disclosure.

## Claims

1. A method, performed by a schedule coordinator, of scheduling radio resources of a virtual distributed unit (vDU) in a wireless communication system, the method comprising:
identifying a radio unit (RU) to be migrated to a target vDU from among at least one RU connected to a source vDU;
requesting the source vDU to exclusively transmit and receive first information including synchronization-related information of at least one user equipment (UE) connected to the RU;
determining a scheduling priority of a source vDU-dedicated radio resource and a scheduling priority of a target vDU-dedicated radio resource;
transmitting the scheduling priority of the source vDU-dedicated radio resource to the source vDU and transmitting the scheduling priority of the target vDU-dedicated radio resource to the target vDU; and
when the migration of the RU is completed, requesting the target vDU to exclusively transmit and receive the first information and requesting the source vDU to stop transmitting and receiving the first information.

2. The method of claim 1, wherein the first information comprises at least one of synchronization signal block (SSB) information, common physical downlink control channel (PDCCH) information, channel state information reference signal (CSI-RS) information, or downlink common data information.

3. The method of claim 1 or 2, wherein second information transmitted using the source vDU-dedicated radio resource and the target vDU-dedicated radio resource comprises at least one of physical downlink shared channel (PDSCH) information, physical uplink shared channel (PUSCH) information, physical uplink control channel (PUCCH) information, sounding reference signal (SRS) information, or UE-specific PDCCH information.

4. The method of any one of claims 1 to 3, wherein the migration of the RU is completed when the at least one UE connected to the RU is all handed over from the source vDU to the target vDU.

5. The method of any one of claims 1 to 4, further comprising:
receiving, from the source vDU, information related to at least one UE served via the source vDU; and
receiving, from the target vDU, information related to at least one UE served via the target vDU,
wherein the scheduling priority of the source vDU-dedicated radio resource and the scheduling priority of the target vDU-dedicated radio resource are determined based on the information related to the at least one UE served via the source vDU and the information related to the at least one UE served via the target vDU.

6. The method of claim 5, wherein the information related to the at least one UE comprises at least one of a data rate, a traffic volume, or a block error rate associated with the UE.

7. The method of any one of claims 1 to 6, wherein the scheduling priority of the source vDU-dedicated radio resource and the scheduling priority of the target vDU-dedicated radio resource are determined at intervals of a preset period.

8. The method of any one of claims 1 to 7, wherein
the source vDU-dedicated radio resource is determined by the source vDU based on the scheduling priority of the source vDU-dedicated radio resource, and
the target vDU-dedicated radio resource is determined by the target vDU based on the scheduling priority of the target vDU-dedicated radio resource.

9. The method of any one of claims 1 to 8, wherein, when the scheduling priority of the source vDU-dedicated radio resource is higher than the scheduling priority of the target vDU-dedicated radio resource, the target vDU-dedicated radio resource is determined by the target vDU based on a resource allocation map for the source vDU-dedicated radio resource, which is received from the source vDU.

10. The method of any one of claims 1 to 8, wherein, when the scheduling priority of the target vDU-dedicated radio resource is higher than the scheduling priority of the source vDU-dedicated radio resource, the source vDU-dedicated radio resource is determined by the source vDU based on a resource allocation map for the target vDU-dedicated radio resource, which is received from the target vDU.

11. The method of any one of claims 1 to 10, wherein a region corresponding to the source vDU-dedicated radio resource is separated from a region corresponding to the target vDU-dedicated radio resource in at least one of a time band or a frequency band on an resource block (RB) map corresponding to an entire resource pool.

12. An apparatus for scheduling radio resources of a virtual distributed unit (vDU) in a wireless communication system, the apparatus comprising:
a transceiver; and
at least one processor,
wherein the at least one processor is configured to
identify a radio unit (RU) to be migrated to a target vDU from among at least one RU connected to a source vDU,
request, via the transceiver, the source vDU to exclusively transmit and receive first information including synchronization-related information of at least one user equipment (UE) connected to the RU,
determine a scheduling priority of a source vDU-dedicated radio resource and a scheduling priority of a target vDU-dedicated radio resource,
transmit, via the transceiver, the scheduling priority of the source vDU-dedicated radio resource to the source vDU and the scheduling priority of the target vDU-dedicated radio resource to the target vDU, and
when the migration of the RU is completed, request, via the transceiver, the target vDU to exclusively transmit and receive the first information and request the source vDU to stop transmitting and receiving the first information.

13. A virtual radio access network (vRAN) connected to a core network in a wireless communication system, the vRAN comprising:
a virtual centralized unit (vCU);
at least one virtual distributed unit (vDU) connected to the vCU;
at least one radio unit (RU) connected to the at least one vDU; and
a schedule coordinator configured to schedule radio resources of the at least one vDU,
wherein the schedule coordinator is configured to
identify an RU to be migrated to a target vDU, from among at least one RU connected to a source vDU,
request the source vDU to exclusively transmit and receive first information including synchronization-related information of at least one user equipment (UE) connected to the RU,
determine a scheduling priority of a source vDU-dedicated radio resource and a scheduling priority of a target vDU-dedicated radio resource,
transmit the scheduling priority of the source vDU-dedicated radio resource to the source vDU and transmit the scheduling priority of the target vDU-dedicated radio resource to the target vDU, and
when the migration of the RU is completed, request the target vDU to exclusively transmit and receive the first information and request the source vDU to stop transmitting or receiving the first information.

14. The vRAN of claim 13, wherein
each of the at least one vDU comprises a medium access control (MAC) scheduler, and
each MAC scheduler is configured to determine a dedicated radio resource for the vDU corresponding thereto.

15. The vRAN of claim 13 or 14, wherein
the schedule coordinator is included in the source vDU,
the source vDU comprises a processor, and
the schedule coordinator is further configured to request the processor to exclusively transmit and receive the first information, transmit the scheduling priority of the source vDU-dedicated radio resource to the processor, and when the migration of the RU is completed, request the processor to stop transmitting and receiving the first information.
